# FASCICULE DE BREVET EUROPEEN

(11) **EP 1 922 938 B1**
(45) Date de publication et mention de la délivrance du brevet: **14.05.2014**
(21) Numéro de dépôt: 06291620.0
(22) Date de dépôt: 18.10.2006
(51) Int. Cl.: A23L 1/237

(54) **Composition alimentaire notamment de salage**
Zusammensetzung zur Salzung von Nahrungsmittelprodukten
Salting compositions for use in foods

(43) Date de publication de la demande: 21.05.2008
(73) Titulaire: NUTRIONIX, 35000 RENNES (FR)
(72) Inventeur: Leclerc, Christian, 18130 Dun sur Auron (FR)
(74) Mandataire: Barbot, Willy

(56) Documents cités:
- EP-A- 0 766 927
- EP-A1- 0 041 620
- EP-A1- 0 124 254
- FR-A1- 2 196 151
- US-A1- 4 216 244
- US-A1- 5 562 942

## Description

La présente invention se rapporte au domaine de l'alimentation. Elle concerne tout particulièrement une composition notamment de salage, un procédé de préparation d'un produit alimentaire comprenant une étape d'addition de ladite composition ainsi que l'utilisation de ladite composition.

Usuellement, le sel employé dans l'agroalimentaire est un sel raffiné comportant plus de 95% de chlorure de sodium et quelques adjuvants tels les anti-agglomérants et/ou les composés iodés ou fluorés.

Toutefois, la consommation excessive de chlorure de sodium est à l'origine de nombreux troubles et pathologies dont la prévalence ne cesse de croître.

C'est pourquoi, afin de réduire les pathologies liées à la consommation excessive de sodium, il a été développé des compositions de sel pauvre en chlorure de sodium.

Généralement, les compositions de l'art antérieur remplacent le sodium par du potassium car un apport alimentaire en potassium élevé permet de lutter contre plusieurs pathologies majeures, notamment l'hypertension, les accidents vasculaires cérébraux, l'ostéoporose, les lithiases rénales, le diabète.

Toutefois, les qualités organoleptiques des compositions de l'art antérieur pauvres en chlorure de sodium sont généralement inférieures à celles du chlorure de sodium.

En outre, ces compositions ne sont pas parfaitement adaptées à certaines utilisations comme agent de salage pour la panification ou l'industrie agro-alimentaire.

L'invention vise à remédier à tout ou partie de ces problèmes en proposant une composition amoindrie en chlorure de sodium tout en possédant des qualités organoleptiques satisfaisantes, en particulier proches de celles du chlorure de sodium.

La composition selon l'invention est particulièrement adaptée à une utilisation en tant qu'agent de salage dans la panification car elle permet notamment de diminuer le temps de fermentation de la pâte à pain et d'augmenter l'élasticité de celle-ci ce qui facilite son pétrissage. En outre, dans l'industrie agro-alimentaire les compositions selon l'invention permettent notamment d'augmenter la brillance et/ou l'intensité de couleur des produits alimentaires.

A cet effet, et selon un premier aspect, la composition selon l'invention comprend du chlorure de potassium, un sel organique de potassium et du carbonate ou bicarbonate de sodium.

La composition selon l'invention peut en outre comprendre du chlorure de sodium.

La composition selon l'invention peut comprendre une teneur en chlorure de sodium inférieure ou égale à 2% en poids par rapport au poids total de la composition.

Selon l'invention, le sel organique de potassium peut être choisi dans le groupe comprenant le citrate, le tartrate, l'adipate, le succinate, le glutamate et le malate de potassium, de préférence le citrate de potassium.

En particulier, la composition selon l'invention comprend une teneur en sel organique de potassium allant de 50 à 95 %, de préférence de 60 à 80 % en poids par rapport au poids total de la composition.

En particulier, la composition selon l'invention est dépourvue d'acide glutamique, de sel de calcium et/ou de sel d'ammonium.

Le ratio en poids de sel organique de potassium par rapport au carbonate ou bicarbonate de sodium peut aller de 1 à 10, notamment de 1,5 à 7,5, en particulier de 2 à 4, voire 3.

En particulier, la composition selon l'invention comprend en outre de la silice.

La composition selon l'invention peut comprendre une teneur en silice allant de 0,05% à 5%, en particulier de 0,1% à 2,5% et tout particulièrement de 0,2% à 1% en poids par rapport au poids total de la composition.

La composition selon l'invention peut se présenter sous différentes formes notamment adaptées à un usage alimentaire. En particulier, elle se présente sous la forme de poudre.

Selon un second aspect, l'invention a également pour objet un procédé de préparation d'un produit alimentaire comprenant au moins une étape consistant à ajouter la composition selon l'invention, à un produit alimentaire.

En particulier, le produit alimentaire est choisi dans le groupe comprenant le pain, les plats cuisinés, les soupes, les sauces, les pizzas, les viandes, la charcuterie, de préférence le pain.

Selon un troisième aspect, l'invention a également pour objet l'utilisation d'une composition selon l'invention, en tant qu'agent de salage.

Enfin, selon un quatrième aspect, l'invention a également pour objet l'utilisation d'une composition selon l'invention, en tant que substituant du chlorure de sodium.

Des compositions selon l'invention sont présentées ci-dessous à titre d'exemple.

Les exemples suivants exposent deux mélanges possibles.
1) Le mélange 1 comprend :
   - 60 % en poids de citrate de potassium ;
   - 20 % en poids de NaHCO₃ ;
   - 19,8 % en poids de KCl ; et
   - 0,2 % en poids de SiO₂.
2) Le mélange 2 comprend :
   - 60 % en poids de citrate de potassium ;
   - 20 % en poids de NaHCO₃ ;
   - 19,8 % en poids de KHCO₃; et
   - 0,2 % en poids de SiO₂.

Par la suite, on présente des exemples d'utilisation de la composition selon l'invention comme substituant du chlorure de sodium dans divers produits alimentaires.

Dans un mode d'utilisation, les mélanges 1 et 2 sont incorporés selon différentes proportions à du chlorure de sodium afin de substituer une partie de celui-ci.

Dans autre un mode d'utilisation, les mélanges 1 et 2 substituent le chlorure de sodium dans des proportions allant de 18% à 70 %.

Le tableau suivant présente les pourcentages en poids des différents composés des mélanges 1 et 2, par rapport au poids total de la composition en fonction des pourcentages de substitution du chlorure de sodium par un desdits mélanges.

| % de substitution | Mélange pur | A:70% | B:50% | C:30% | D:18% |
|---|---|---|---|---|---|
| | | | | | |

| **Mélange 1** | | | | | |
|---|---|---|---|---|---|
| Citrate de potassium | 60 | 42 | 30 | 18 | 10,8 |
| NaHCO₃ | 20 | 14 | 10 | 6 | 3,6 |
| KCl | 19,8 | 13,86 | 9,9 | 5,94 | 3,564 |
| SiO₂ | 0,2 | 0,14 | 0,1 | 0,06 | 0,036 |
| NaCl | 0 | 30 | 50 | 70 | 82 |
| | | | | | |

| **Mélange 2** | | | | | |
|---|---|---|---|---|---|
| Citrate de potassium | 60 | 42 | 30 | 18 | 10,8 |
| KHCO₃ | 19,8 | 13,86 | 9,9 | 5,94 | 3,564 |
| SiO₂ | 0,2 | 0,14 | 0,1 | 0,06 | 0,036 |
| NaCl | 20 | 44 | 60 | 76 | 85,6 |

Avantageusement, la composition selon l'invention est utilisée dans la panification en boulangerie traditionnelle ou en industrie.

On donne ci-après des tests réalisés d'une part en boulangerie traditionnelle et d'autre part en panification industrielle afin d'illustrer les avantages surprenant de la composition selon l'invention dans la panification.

En boulangerie artisanale, le procédé de préparation de baguettes de pain « test » comporte les étapes suivantes:
a) Mélange dans un pétrin à spirale pendant 6 minutes environ des ingrédients suivants :
   - 3 litres d'eau ;
   - 5 kg de farine (T55+15g de blé complet concassé) ;
   - 2 kg de levain liquide ;
   - 50 g de levure ;
   - 50g de beurre ;
   - 20g d'une composition de salage par kg de farine, soit 100 g.
b) Repos en masse du mélange ainsi réalisé, à température ambiante, pendant environ 1 heure 30. Cette étape permet la réalisation d'une première fermentation et le développement des saveurs.
c) Division du mélange en boules de poids égales.
d) Détente de la pâte pendant 20 minutes.
e) Façonnage des boules sous forme de baguettes.
f) Repos des baguettes 1 heure à température ambiante afin de réaliser une seconde fermentation.
g) Cuisson des baguettes.

Afin de tester l'influence de la composition selon l'invention sur la fabrication du pain et sur ses qualités organoleptiques, des baguettes témoin ont été préparées avec 18 g de chlorure de sodium par kg de farine et des baguettes « test » ont été préparées avec 20 g par kg de farine de composition selon l'invention dont le chlorure de sodium est substitué à 30 %, 50% et 70 % du poids total par le mélange 1.

En raison de l'utilisation d'une composition selon l'invention, on remarque que les baguettes « test » subissent une fermentation plus rapide que les baguettes témoin. Ainsi, pour les baguettes témoin, un repos d'une heure à température ambiante ne permet d'obtenir qu'une fermentation médiocre. Ainsi, afin d'obtenir une fermentation similaire aux baguettes « test », les baguettes témoin sont laissées reposées à une température contrôlée d'environ 15 °C pendant une nuit. Par conséquent, l'utilisation de la composition selon l'invention permet de réduire le temps de préparation.

Lors de la mise en boule, la pâte des baguettes « test » est relâchée par rapport à la pâte des baguettes témoin. Toutefois, après la détente de la pâte, on ne constate pas de différence notable des propriétés physiques de la pâte.

Par ailleurs, après la cuisson, les baguettes « test » présentent un aspect extérieur similaire à celui des baguettes témoin et possèdent une mie présentant des alvéoles brillants et irréguliers, signe d'une baguette de bonne qualité.

Afin de déterminer l'acceptation de la composition selon l'invention par les consommateurs, des tests sensoriels ont été réalisés. Les résultats montrent que d'un point de vue gustatif, la substitution du chlorure de sodium par une composition selon l'invention est satisfaisante. En effet près de 40 % des sujets interrogés ne font pas de différence avec une baguette témoin. On constate tout de même que, lorsque le chlorure de sodium est substitué à 50 %, le manque de sensation salée commence à être ressenti et lorsque le chlorure de sodium est substitué à 70 %, les baguettes sont fades.

Afin de compléter l'étude des impacts de l'utilisation d'une composition selon l'invention sur la panification, des essais ont été réalisés en panification industrielle sur des pains témoins T1 et T2 préparés avec respectivement 18 et 22 g de chlorure de sodium par kg de farine et sur des pains « test » E1, E2, E3 préparés avec 22 g de composition selon l'invention dont le chlorure de sodium est respectivement substitué à 18 %, 32% et 50 % par le mélange 1.

Ces études confirment que l'utilisation de la composition selon l'invention permet de réduire la durée de fermentation et par conséquent, les coûts de production.

En outre, lors du pétrissage de la pâte, le lissage, l'élasticité et l'extensibilité de la pâte est évalué et les résultats suivants sont observés :
Le lissage de la pâte est identique pour les pains T1, T2 et E1. -
Les pains E1, E2 et E3 possèdent une plus grande consistance que T1 et T2.
L'élasticité au pétrissage est plus importante pour E1 que T1 et T2.
Les extensibilités de E1 et T1 sont similaires mais inférieures à celle de T2.
Le collant des pâtes est identique pour T1, T2, E1, E2 et E3.

Par conséquent, on remarque que la composition selon l'invention permet d'augmenter l'élasticité de la pâte. Ainsi, le pétrissage qui est une opération consistant à donner de l'élasticité et de la souplesse à une pâte est facilité.

Au cours de l'opération de façonnage appelé également mise en pâton, on évalue également l'élasticité et l'extensibilité. On constate que l'élasticité de la pâte varie selon l'agent salant utilisé. En effet, l'élasticité de E1 est supérieure à celle de T1, elle-même supérieure à celle de T2. Par ailleurs, l'extensibilité au façonnage est identique à l'extensibilité mesurée lors du pétrissage pour les pains T1 et T2 alors qu'elle a diminué entre le pétrissage et le façonnage pour le pain E1.

Pour les pains T1 et E1, l'élasticité de la pâte n'a pas évolué entre le pétrissage et le façonnage. L'élasticité de la pâte a toutefois diminué pour le pain T2.

Lorsque le pain est cuit, on observe que le coup de lame est identique entre les pains E1 et T1 mais est moindre avec le pain T2. En outre, le volume du pain est légèrement supérieur avec le pain T1.

Par ailleurs, on observe que le goût du pain E1 est intermédiaire entre le pain T1 et le pain T2 et que le goût des pains E2 et E3 présente un léger arrière goût métallique qui peut s'expliquer par la présence de chlorure de potassium. Par conséquent, dans un mode de réalisation de l'invention, la composition de salage ne comporte pas de chlorure de potassium.

La composition selon l'invention peut également être utilisé dans l'industrie agro-alimentaire en tant qu'agent de salaison pour du bouillon de volaille, de la sauce tomate, de la sauce béchamel, de la pizza ou du jambon.

Les impacts de la composition selon l'invention sur la saveur salée en attaque et sur la longueur en bouche n'apparaissent qu'à des taux de substitution du chlorure de sodium par le mélange 1, supérieurs à 50%.

Par ailleurs, des tests de couleur ont démontrés que l'utilisation de la composition selon l'invention permet d'obtenir des produits plus brillants et/ou présentant une couleur plus intense. Notamment, la béchamel fabriquée en utilisant une composition selon l'invention est plus jaune et plus brillante.

## Revendications

1. Composition comprenant du chlorure de potassium, un sel organique de potassium et du carbonate ou bicarbonate de sodium.

2. Composition selon la revendication 1, **caractérisée en ce que** le ratio en poids de sel organique de potassium par rapport au carbonate ou bicarbonate de sodium est choisi parmi les valeurs allant de 1 à 10, notamment de 1,5 à 7,5, en particulier de 2 à 4, voire 3.

3. Composition selon l'une quelconque des revendications 1 ou 2, **caractérisée en ce qu'**elle comprend en outre une teneur en chlorure de sodium inférieure ou égale à 2% en poids par rapport au poids total de la composition.

4. Composition selon l'une quelconque des revendications 1 à 3, **caractérisée en ce que** le sel organique de potassium est choisi dans le groupe comprenant le citrate, le tartrate, l'adipate, le succinate, le glutamate et le malate de potassium, en particulier le citrate de potassium.

5. Composition selon l'une quelconque des revendications 1 à 4, **caractérisée en ce qu'**elle comprend une teneur en sel organique de potassium allant de 50 à 95 %, de préférence de 60 à 80 % en poids par rapport au poids total de la composition.

6. Composition selon l'une quelconque des revendications 1 à 5, **caractérisée en ce qu'**elle est dépourvue d'acide glutamique, de sel de calcium et/ou de sel d'ammonium.

7. Composition selon l'une quelconque des revendications 1 à 6, **caractérisée en ce qu'**elle comprend en outre de la silice.

8. Procédé de préparation d'un produit alimentaire comprenant au moins une étape consistant à ajouter la composition selon l'une quelconque des revendications 1 à 7, à un produit alimentaire.

9. Procédé selon la revendication 8, **caractérisé en ce que** le produit alimentaire est choisi dans le groupe comprenant le pain, les plats cuisinés, les soupes, les sauces, les pizzas, les viandes, la charcuterie, de préférence le pain.

10. Utilisation d'une composition selon l'une quelconque des revendications 1 à 7, en tant qu'agent de salage.

11. Utilisation d'une composition selon l'une quelconque des revendications 1 à 7, en tant que substituant du chlorure de sodium.

## Patentansprüche

1. Rezeptur umfassend Kaliumchlorid, ein organisches Kaliumsalz und Natriumkarbonat oder Natriumbikarbonat.

2. Rezeptur nach Anspruch 1, **dadurch gekennzeichnet, dass** das Gewichtsverhältnis des organischen Kaliumsalzes Im Verhältnis zum Natriumkarbonat oder Natriumbikarbonat aus den Werten von 1 bis 10, vor allem von 1,5 bis 7,5, im Speziellen von 2 bis 4, sogar 3 ausgewählt wird.

3. Rezeptur nach irgendeinem der Ansprüche 1 oder 2, **dadurch gekennzeichnet, dass** sie darüber hinaus einen Gehalt an Natriumchlorid kleiner oder glelch 2% des Gewichts im Verhältnis zum Gesamtgewicht der Rezeptur enthält.

4. Rezeptur nach irgendeinem der Ansprüche 1 bis 3, **dadurch gekennzeichnet, dass** das organische Kaliumsalz aus einer Gruppe ausgewählt wird, die Zitrat, Tartrat, Adipat, Succinat, Glutamat und Kaliummalat, und im Speziellen Kallumzitrat umfasst.

5. Rezeptur nach irgendeinem der Ansprüche 1 bis 4, **dadurch gekennzeichnet, dass** sie einen Gehalt an organischem Kallumsalz von 50 bis 95%, vorzugshalber von 60 bis 80% des Gewichts im Verhältnis zum Gesamtgewicht der Rezeptur umfasst.

6. Rezeptur nach irgendelnem der Ansprüche 1 bis 5, **dadurch gekennzeichnet, dass** sie keine Glutaminsäure, kein Kalziumsalz und/ oder Ammoniumsalz enthält.

7. Rezeptur nach irgendeinem der Ansprüche 1 bis 6, **dadurch gekennzeichnet, dass** sie darüber hinaus Siliziumdioxid enthält.

8. Verfahren zur Zubereitung eines Nahrungsmittelprodukts, umfassend zumindest einen Schritt, der darin besteht, einem Nahrungsmittelprodukt die Rezeptur nach irgendeinem der Ansprüche 1 bis 7 beizugeben.

9. Verfahren nach Anspruch 8, **dadurch gekennzeichnet, dass** das Nahrungsmittelprodukt aus einer Gruppe ausgewählt wird, die Brot, Fertiggerichte, Suppen, Soßen, Pizzen, Fleischwaren, Wurstwaren, und vorzugsweise Brot enthält,

10. Verwendung einer Rezeptur nach irgendeinem der Ansprüche 1 bis 7 als Salzungsmittel.

11. Verwendung einer Rezeptur nach Irgendeinem der Ansprüche 1 bis 7 als Substituent von Natriumchlorit.

## Claims

1. A composition comprising potassium chloride, a potassium organic salt, and sodium carbonate or bicarbonate.

2. The composition according to claim 1, **characterized in that** the weight ratio of potassium organic salt to sodium carbonate or bicarbonate is chosen from among the values ranging from 1 to 10, particularly from 1.5 to 7.5, and in particular from 2 to 4, or even 3.

3. The composition according to any one of claim 1 or 2, **characterized in that** It further comprises a sodium chloride content lower than or equal to 2% by weight in relation to the total weight of the composition.

4. The composition according to any one of claim 1 to 3, **characterized in that** the potassium organic salt is chosen from the group comprising citrate, tartrate, adipate, succinate, glutamate and potassium malate, and potassium citrate.

5. The composition according to any one of claim 1 to 4, **characterized in that** it comprises a potassium organic salt content ranging from 50 to 95%, and preferably from 60 to 80% by weight In relation to the total weight of the composition.

6. The composition according to any one of claim 1 to 5, **characterized in that** it is devoid of glutamic acid, calcium salt and/or ammonium salt.

7. The composition according to any one of claim 1 to 6, **characterized in that** it further comprises silica.

8. A method of preparing a food product comprising at least one step consisting In adding the composition as claimed in any one of claims 1 to 7 to a food product.

9. The method of claim 8, **characterized In that** the food product is chosen from the group comprising bread, prepared meals, soups, sauces, pizzas, meats, delicatessen foods, and preferably bread.

10. A use of a composition as claimed In any one of claims 1 to 7as a salting agent.

11. A use of a composition as claimed in any one of claims 1 to 7 as a sodium chloride substitute.
